# EUROPÄISCHE PATENTSCHRIFT

(11) **EP 3 497 314 B1**
(45) Veröffentlichungstag und Bekanntmachung des Hinweises auf die Patenterteilung: **31.03.2021**
(21) Anmeldenummer: 17761004.5
(22) Anmeldetag: 15.08.2017
(51) Int. Cl.: F02D 41/00, F02D 19/02, F02D 19/06, F02M 21/02

(54) **GASZUFUHRVERFAHREN FÜR EINEN GASMOTOR ODER ZWEISTOFFMOTOR SOWIE GASVERSORUNGSVORRICHTUNG DAFÜR**
GAS FEED METHOD FOR A GAS ENGINE OR DUAL-FUEL ENGINE, AND GAS SUPPLY APPARATUS FOR SAME
PROCÉDÉ D'AMENÉE DE GAZ POUR UN MOTEUR À GAZ OU UN MOTEUR À DEUX COMBUSTIBLES ET DISPOSITIF D'ALIMENTATION EN GAZ

(30) Priorität: 15.08.2016 DE 102016115113
(43) Veröffentlichungstag der Anmeldung: 19.06.2019
(73) Patentinhaber: Technische Universität Hamburg-Harburg, 21073 Hamburg (DE)
(72) Erfinder: WIRZ, Friedrich, 25488 Holm (DE); PANTEN, Thilo, 22085 Hamburg (DE)
(74) Vertreter: Hansen, Jochen
(86) Internationale Anmeldenummer: PCT/DE2017/100685
(87) Internationale Veröffentlichungsnummer: WO 2018/033185

(56) Entgegenhaltungen:
- EP-A2- 0 690 215
- DE-A1-102014 216 874
- DE-T5-112012 005 503
- US-A- 5 752 489

## Beschreibung

Die Erfindung betrifft ein Gaszufuhrverfahren für einen Gasmotor oder Zweistoffmotor, in dem Verbrennungsgas mit Verbrennungsluft verbrannt wird, wobei stromaufwärtig des Gasmotors oder Zweistoffmotors ein Gasventil zum Zuführen von Verbrennungsgas in die Verbrennungsluft angeordnet ist. Ferner betrifft die Erfindung eine Gasversorgungsvorrichtung für einen Gasmotor oder Zweistoffmotor, in dem Verbrennungsgas mit Verbrennungsluft verbrannt wird, mit einer druckbehafteten Gasquelle und einer Gaszufuhr zum Gasmotor oder Zweistoffmotor, wobei stromaufwärtig zum Gasmotor oder Zweistoffmotor in der Gaszufuhr ein Gasventil zum Zuführen von Verbrennungsgas in die Verbrennungsluft angeordnet ist.

Gasmotoren oder Zweistoffmotoren weisen neben zu jedem Zylinder zugeordneten Ein- und Auslassventilen ergänzend noch ein Gasventil auf, damit das über die Gasleitung zugeführte Verbrennungsgas gegen die Verbrennungsluft abgeschlossen bleibt. Dieses Gasventil wird z.B. während des Ansaughubes geöffnet und anschließend wieder verschlossen. Während der Öffnungsphase strömt Verbrennungsgas über die Gasleitung durch das Gasventil in einen Vorraum vor dem Einlassventil oder den Einlassventilen, sodass sich dort das gewünschte Gemisch aus Verbrennungsgas und Verbrennungsluft bildet, das dann während der Öffnung des Einlassventils in den Verbrennungsraum des Zylinders einströmt. Bei heutigen Gasmotoren und Zweistoffmotoren wird dieses erforderliche Gasventil meist über einen Aktuator elektrisch betätigt.

Ferner sind für die bekannten Gasmotoren und Zweistoffmotoren stets so genannte Gasregelstrecken vorgesehen, die den Gasdruck des über die Gasleitung zugeführten Verbrennungsgases in der Zuleitung der mit Gas zu versorgenden Verbrennungskraftmaschine regeln. Die Gasregelstrecke soll dabei den momentanen Gasdruck des zugeführten Verbrennungsgases so regeln, dass der Differenzdruck über dem verbrennungskraftmaschinenseitigen Gasventil möglichst konstant gehalten wird, um zu gewährleisten, dass die am Markt verfügbaren Ventile im Betrieb gemäß Anforderungsprofil betätigt werden können. Dabei ist es zum Konstanthalten des Differenzdruckes erforderlich, dass ein Druckregler an der Gasregelstrecke den Gasdruck kontinuierlich je nach Belastungssituation und Ladeluftdruck des Gasmotors beziehungsweise des Zweistoffmotors anpasst. Hierbei ist es notwendig, dass die meist großvolumige Gasregelstrecke möglichst nahe der Verbrennungskraftmaschine angeordent wird, um die Trägheit des Systems zu minimieren. Insbesondere in der mobilen Anwendung, beispielsweise beim Schiffsantrieb, stellt die Positionierung der Gasregelstrecke eine erhebliche Einschränkung im Schiffsentwurf dar. Zudem wird der Hersteller der Verbrennungskraftmaschine gezwungen, die Gasregelstrecke, welche häufig nicht aus dem eigenen Produktportfolio stammt, in die Steuerung der Verbrennungskraftmaschine mit einzubinden.

Druckentlastete Ventile sind insbesondere für pneumatische Federanlagen für Kraftfahrzeuge bekannt, wie beispielsweise aus DE 10 2007 050 151 B4, DE 36 43 318 A1, WO 2007/118674 A2 oder EP 2 381 146 A2. Die Anforderungen für ein derartiges Ventil für pneumatische Federungen bei Kraftfahrzeugen sind jedoch nicht mit den Anforderungen für ein Gasventil für Kraftmaschinen vergleichbar. Besondere Merkmale für druckentlastete Ventile für den Einsatz in einer Luftfederanlage in Kraftfahrzeugen sind eine einfache Konstruktion sowie die Fähigkeit, gegen hohe Druckdifferenzen (bis 10 bar) zu öffnen. Ein solches Ventil kann nicht für die Gaszufuhr für Kraftmaschinen eingesetzt werden, zumal es nicht für die sehr dynamische Betriebsweise (ca. 375 Schaltvorgänge pro Minute bei einem mittelschnell laufenden Dual-Fuel-Motor) konzipiert wurde, die z. B. bei Kolbenmotoren auftritt. Weiterhin ist fraglich, ob mit Hilfe der beschriebenen Ausführungen die benötigte Gasmenge innerhalb der zur Verfügung stehenden Zeit zugeführt werden kann.

In der Motorentechnik sind beispielsweise druckentlastete Ventile als Nocken gesteuerte, schaftgeführte Einlassventile aus der DE 197 35 315 A1 bekannt. Damit sollen beim Schließen des Teller- Einlassventils aus dem hohen Gasdruck in der Arbeitskammer der Kraftmaschine resultierende Belastungen auf den Ventiltrieb vermieden werden. Dieses Ventil wird mechanisch angesteuert, so dass die Gleitflächen durch Reibung verschleißen. Mit diesem Einlassventil wird also direkt der Einlass des Kraftstoff-/Gas-/Luftgemisches vom Einlasskanal in die Arbeitskammer der Brennkraftmaschine gesteuert. Dieses Einlassventil eignet sich jedoch nicht für das Absperren der Gaszufuhr zum Ladelufttrakt, weil der Öffnungsquerschnitt zu gering ist, so dass das Verbrennungsgas bei den herrschenden Druckdifferenzen nicht in ausreichender Menge strömen könnte.

Die US 5 752 489 A beschreibt ein Stromventil für die Regelung eines kontinuierlichen Gasstromes. Die gesamte Einheit enthält ein Tellerventil, das mit seinem Ventilteller eine einstellbare und dauerhaft verschließbare Drossel darstellt. Dabei ist Ziel der US 5 752 489 A, entweder den kontinuierlichen Gasdurchfluss in den Luftstrommischereinlass zu regeln oder ihn gänzlich zu verhindern, wenn nicht mit Gas gefahren werden soll. Dabei wird eine Druckentlastung des Stromventils beschrieben, wobei jedoch die Druckentlastung in Bezug auf den (variablen) Gaszufuhrdruck ausgerichtet ist. Entsprechend wird von einem Strom-Regel-Organ gesprochen. Der zugeführte gasförmige Brennstoff wird also in seinem kontinuierlichen Volumenstrom geregelt.

Bei der EP 0 690 215 A2 ist Ausgangspunkt ein herkömmlicher Saugmotor, bei dem sich im Ansaugtrakt ein Vakuum befindet. Aufgabe der dort beschriebenen Erfindung ist es insbesondere einen Gasmotor anzugeben, bei dem das Luft-/Brennstoffverhältnis durch Steuern der zugeführten Gasmenge eingestellt werden kann. Entsprechend wird dort ein Stellventil für einen kontinuierlichen Durchfluss beschrieben, welches die zugeführte Gasmenge regelt. Dabei ist auch hier Aufgabe, diese Gaszufuhrregelung unabhängig vom Druck des zugeführten Gases zu machen. Das Ventil soll einen konstanten Senkendruck unabhängig vom Quellendruck einregeln.

Bei der DE 11 2012 005503 T5 handelt es sich ebenfalls um einen Saugmotor für gasförmigen Kraftstoff bei dem ein Brennkraftmaschinensteuergerät bereit gestellt wird, das ausgezeichnete Verbrennungsbedingungen in der Brennkraftmaschine aufrechterhält, selbst wenn der Kraftstoffdruck im Gastank absinkt.

Die DE 10 2014 216 874 A1 beschreibt ein Verfahren zum Betreiben einer Gasbrennkraftmaschine, bei dem der Gasbrennstoff über ein Gasventil in einen Venturi-Mischer mit Luft vermischt und anschließend mittels Abgasturbolader verdichtet dem Brennraum der Gasbrennstoffmaschine zugeführt wird.

Ferner zeigt die DE 10 2009 002 836 A1 ein druckausgeglichenes Gasventil zur Dosierung von gasförmigem Brennstoff, wie Erdgas, Flüssiggas oder Wasserstoff für Gasmotoren oder Brennstoffzellenantreibe.

Eine ähnliche Anordnung ist aus der US 8,272,399 B2 als Brennstoffzuführventil unmittelbar vor dem Einlassbereich eines Brennstoffmotors beschrieben, wobei das Ventil vollständig oder zumindest teilweise druckentlastet ist.

Gleichwohl sind für Gasmotoren oder Zweistoffmotoren daher seit Jahrzehnten so genannte Gasdruckregelstrecken vorgesehen, die im Zulauf des Verbrennungsgases, möglichst unmittelbar vor der Gaszufuhr mittels Gasventil zum Ladelufttrakt angeordnet sind. Derartige Gasdruckregelstrecken weisen neben der Druckregelung des zuströmenden Gases häufig noch weitere Sicherheitsfunktionen, wie beispielsweise ein Gasfilter sowie eine Notabschaltung auf. Typische Gasregelstrecken für Schiffsmotoren weisen eine Länge von 1 bis 3 Meter auf. Entsprechend schwierig ist der sachgerechte räumliche Aufbau derartiger Anlagen im Schiffsrumpf, zumal die Gasregelstrecke einer ventilierten Einhausung bedarf.

Die jedoch im Stand der Technik als unerlässlich angesehenen Gasregelstrecken haben neben den räumlichen Schwierigkeiten bei deren Positionierung auch regelungstechnische Schwierigkeiten, da mit zunehmendem Abstand vom Verbrennungsraum die Trägheit des Systems zunimmt. Ferner handelt es sich um eine Vielzahl von Bauteilen, die teils von der Motorsteuerung angesteuert werden müssen. Entsprechend teuer und wartungsintensiv ist die im Stand der Technik bekannte Gasdruckregelstrecke, womit auch die Zuverlässigkeit des Gasmotors beziehungsweise Zweistoffmotors davon abhängt. Insgesamt ist daher festzustellen, dass die Gaszumessung, die über die Gasregelstrecke mittels geregeltem Differenzdruck erfolgt, zu Ungenauigkeiten und damit nicht zur optimalen Versorgung der Verbrennungskraftmaschine führt.

Aufgabe der Erfindung ist es daher, die Gaszumessung einer Verbrennungskraftmaschine zu vereinfachen und zu verbessern.

Gelöst wird diese Aufgabe mit einem Gaszufuhrverfahren für einen Gasmotor oder Zweistoffmotor gemäß Anspruch 1. Ferner wird die Aufgabe mit einer Gasversorgungsvorrichtung für diesen Gasmotor oder Zweistoffmotor gemäß Anspruch 5 gelöst.

Dadurch, dass der Gasmotor oder Zweistoffmotor mit einem veränderlichen Ladeluftdruck beaufschlagt wird , wobei das Verbrennungsgas unabhängig vom Betriebszustand des Gasmotors oder Zweistoffmotors ungeregelt dem Gasventil zugeführt wird und dabei die Gaszumessung allein durch die präzise Steuerung des Gasventils erfolgt, nämlich während des Betriebes des Gasmotors oder Zweistoffmotors der Druck vor und hinter dem Gasventil sowie die Temperatur des zugeführten Verbrennungsgases gemessen, der Motorbetriebspunkt erfasst und daraus die Öffnungsdauer und/oder die freigegebene Öffnungsquerschnittsfläche des Gasventils gesteuert werden, wird eine für den betreffenden Zylinder des Gasmotors oder Zweistoffmotors vorbestimmte Masse des Verbrennungsgases zugeführt, ohne dass in der Gaszufuhr eine Gasregelstrecke erforderlich ist. Die Gaszumessung erfolgt allein durch die präzise Steuerung des Gasventils, das unmittelbar vor dem Einlassbereich des Gasmotors bzw. Zweistoffmotors angeordnet ist, sodass keine Trägheitseffekte auftreten können und der Motor stets mit der genau richtigen Gasmenge versorgt wird. Damit wird eine für den betreffenden Zylinder des Gasmotors oder Zweistoffmotors anhand der Messwerte und des Motorbetriebspunktes ermittelte Masse des Verbrennungsgases zugeführt. Anhand der Messergebnisse kann die Steuerung die Öffnungsdauer und/oder die freigegebene Öffnungsquerschnittsfläche des Gasventils nachregeln, sodass die zugeführte Verbrennungsgasmasse noch präziser eingehalten werden kann. Vorrichtungsgemäß wird dies dadurch erreicht, dass der Gasmotor oder Zweistoffmotor mit einem veränderlichen Ladeluftdruck beaufschlagt ist, wobei das Gasventil unabhängig von der dort anliegenden Druckdifferenz betätigbar ausgebildet ist und unmittelbar vor dem Einlassbereich des Gasmotors bzw. Zweistoffmotors angeordnet ist, so dass eine Regelung des Gasdruckes in Abhängigkeit vom Betriebszustand des Gasmotors oder Zweistoffmotors stromaufwärtig zum Gasventil nicht vorgesehen ist.

Wenn der Druck des dem Gasventil zugeführten Verbrennungsgases gemindert oder begrenzt wird, wird ein zu hoher Zulaufdruck von der Gasquelle auf einen konstanten Wert beziehungsweise linear auf einen niedrigeren Wert reduziert. Dies erleichtert den Betrieb des Gasventils, um bei auftretenden unterschiedlichen Gasdruckdifferenzen am Gasventil gleichwohl ein schnelles Öffnen und Schließen des Gasventils zu ermöglichen.

In weiterer, bevorzugter Ausgestaltung ist vorgesehen, dass ein vorab erfasstes Durchflusskennfeld des Gasventils hinterlegt wird und die Öffnungsdauer und/oder die freigegebene Öffnungsquerschnittsfläche des Gasventils gemäß der aktuellen Messwerte, des aktuellen Motorbetriebspunktes und des Durchflusskennfeldes gesteuert werden. Das Durchflusskennfeld des Ventils wird hierbei bevorzugt mit Hilfe eines Prüfstandes vorab ermittelt.

Wenn das Gasventil druckentlastet betrieben wird, werden die erforderlichen Stellkräfte für das Gasventil reduziert, was die Zuverlässigkeit und Dosierungsgenauigkeit weiter erhöht.

Somit kann unter Berücksichtigung des ermittelten Durchflusskennfeldes die tatsächlich zugeführte Masse des Verbrennungsgases unter Berücksichtigung des gemessenen Drucks und auch der gemessenen Temperatur sehr präzise ermittelt werden. Vorteilhaft wird somit eine von der momentan abgerufenen Leistung des Gasmotors oder Zweistoffmotors abhängige Gasdruckregelung stromaufwärtig vor dem Gasventil nicht durchgeführt, wobei gleichwohl eine gegenüber dem bisherigen Stand der Technik noch deutlich präzisere Gaszumessung für den Verbrennungsmotor erreicht wird. Um schnelle und unabhängig vom jeweiligen auflastenden Druck vorhersehbare Schaltwege am Gasventil zu erreichen, wird das Gasventil druckentlastet betrieben.

Wenn in der Gaszufuhr ein Druckbegrenzer oder ein Druckminderer stromaufwärtig zum Gasventil vorgesehen ist, kann ein übermäßig hoher Gasdruck auf der Gaszufuhrseite des Gasventils vermieden werden.

Dadurch, dass das Gasventil als druckentlastetes Ventil ausgebildet ist, kann das Gasventil unabhängig von der am Gasventil anstehenden Druckdifferenz mit im Wesentlichen stets gleichbleibender Antriebskraft betätigt werden. Dabei bedeutet "druckentlastetes Ventil" ein Ventil mit druckbeaufschlagten Flächen, bei denen die wirksamen Querschnitte (Flächen) des Ventils so ausgebildet sind, dass sich die auf beiden Seiten des zu schaltenden Ventils auflastenden Druckregime hinsichtlich des auf den Schaft des Ventils wirkenden Kräfte annähernd ausgleichen. Dabei bedeutet "annähernd" oder "etwa" ausgeglichen, dass die wirksamen Querschnitte maximal eine Abweichung von 10%, bevorzugt weniger als 5% aufweisen, so dass sich die gegenüber einem nicht druckentlasteten Ventil erforderlichen Stellkräfte um wenigstens 1/10 und besser 1/20 oder gar auf 0 reduzieren.

Die bisher in einer Gasdruckregelstrecke erfolgte Regelung des Drucks des zugeführten Verbrennungsgases in Abhängigkeit des erforderlichen Ladedrucks ist damit überflüssig. Bisher wurde der Druck stromabwärts hinter dem Gasventil gemessen (Ladedruck) und in Abhängigkeit dieses gemessenen Drucks und des Motorbetriebszustandes der Druckregler an der Gasdruckregelstrecke entsprechend geregelt. Damit wurde verhindert, dass ein zu großer Differenzdruck zwischen dem zuzuführenden Verbrennungsgas und dem erforderlichen Ladedruck am Gasventil ansteht, sodass gegebenenfalls eine Öffnung des Gasventils nicht mehr möglich ist oder zu deutlichen Ungenauigkeiten in der Gaszumessung führen.

Dabei ist zu berücksichtigen, dass sich der Ladedruck je nach Lastsituation am Gasmotor beziehungsweise Zweistoffmotor ändert und somit sich auch kurzfristig starke Druckänderungen und damit Änderungen in der Druckdifferenz ergeben. Durch die Ausbildung des Gasventils als druckentlastetes Ventil spielt die Druckdifferenz zwischen dem zuzuführenden Gas p₁ und dem Ladedruck p₂ praktisch keine Rolle mehr, da durch die Druckentlastung am Ventil in jeder Druckdifferenzsituation ein Öffnen des Ventils mit annähernd gleicher Stellkraft möglich ist.

Daher ist es insbesondere bei Verwendung eines druckentlasteten Ventils für einen Gasmotor oder Zweistoffmotor mit einer Gaszufuhr und mindestens einem Zylinder, wobei das Gasventil in der Gaszufuhr angeordnet ist, möglich, eine von der momentan abgerufenen Leistung des Gasmotors oder Zweistoffmotors abhängige Gasdruckregelung vor dem Gasventil fortzulassen.

Dadurch, dass das Gasventil ein Tellerventil und einen Gegenkolben hat, wobei der Gegenkolben etwa gleichen wirksamen Querschnitt wie das Tellerventil aufweist, wird die Konstruktion der Druckentlastung durch den entsprechend ausgebildeten Gegenkolben einfach erreicht. "Etwa" bedeutet dabei, dass der wirksame Querschnitt des Gegenkolbens maximal 10%, bevorzugt weniger als 5% vom wirksamen Querschnitt des Ventils abweicht. Neben einem Tellerventil sind auch konzentrische Ventile oder grundsätzlich Ventile mit Druck beaufschlagten Flächen denkbar, so dass der hier benutzte Begriff "Tellerventil" auch diese Abwandlungen umfassen soll.

Wenn das Tellerventil und der Gegenkolben auf einem Schaft sitzen, wobei das Tellerventil und der Gegenkolben des Gasventils mit dem Schaft in einem Gehäuse geführt sind, werden die Druckausgleichskräfte unmittelbar über den Schaft vom Tellerventil auf den Gegenkolben beziehungsweise umgekehrt geleitet.

Alternativ zur Ausgestaltung mit einem Gegenkolben ist es ebenfalls möglich, dass das Gasventil ein Tellerventil und eine Druckmembran hat, wobei die Druckmembran etwa gleichen wirksamen Querschnitt wie das Tellerventil aufweist. Auf der Druckmembran lastet ein zum Tellerventil entsprechender Gegendruck, sodass eine Druckentlastung gewährleistet ist. Auch hierbei bedeutet "etwa" eine Abweichung von maximal 10%, bevorzugt weniger als 5%.

Dadurch, dass das Tellerventil und die Druckmembran auf einem Schaft sitzen, wobei das Tellerventil mit dem Schaft in einem Gehäuse geführt und die Druckmembran in dem Gehäuse befestigt sind, wird dieser Gegendruck von der Druckmembran direkt über den Schaft auf das Tellerventil geleitet.

Wenn zum Gasventil ein Hilfsventil mit Hilfsventilaktuator vorgesehen ist, das in Grundstellung eine Fluidverbindung zu einer Seite des Gegenkolbens bildet und in aktivierter Stellung eine Verbindung zu einem Senkendruck liefert, wird das druckentlastete Ventil indirekt über den Hilfsventilaktuator und das damit verbundene Hilfsventil, beispielsweise in Form eines Ventilblocks, geschaltet. Dabei verbindet das Hilfsventil in seiner Grundstellung den Mischraum, in dem die Verbrennungsluft, bestehend aus Gas und Umgebungsluft zum Einsaugen in den Gasmotor bzw. Zweistoffmotor bereitgestellt wird, mit der äußeren Seite des Gegenkolbens, so dass nur eine geringe Stellkraft am Schaft des Gasventils in Richtung geschlossener Stellung des Gasventils wirkt. Mit Betätigung des Hilfsventilaktuators wird das Hilfsventil in eine aktivierte Stellung verstellt, so dass über den Ventilblock eine Verbindung des Raumes oberhalb des Gegenkolbens mit einem Senkendruck, beispielsweise Umgebungsluft, erfolgt. Damit wird das Gasventil aus seiner durch den leichten Kraftüberschuss des druckentlasteten Ventils in Richtung seiner Schließstellung festgelegten Schließstellung freigegeben, wobei sich somit das Gasventil öffnet, da die entsprechende Gegenkraft auf der Außenseite des Gegenkolbens fehlt.

In alternativer Ausgestaltung ist zum Öffnen und Schließen ein auf den Schaft wirkender Aktuator zum Stellen des Gasventils vorgesehen. Der Aktuator ist beispielsweise ein elektromotorischer, elektromagnetischer, pneumatischer oder hydraulischer Antrieb, der den Schaft und damit das Gasventil von seiner Schließstellung bei Ansteuerung des Aktuators in seine Offenstellung verstellt.

Um die Schließstellung als Ruhestellung mechanisch voreinzustellen, ist eine Feder am Gasventil angeordnet, die das Ventil in Schließrichtung vorbelastet. Dabei kann die Feder eine Druck-, Zug- oder Drehfeder sein.

Nachfolgend werden verschiedene Ausführungsbeispiele der Erfindung anhand der beiliegenden Zeichnungen beschrieben.

Darin zeigt:
- Fig. 1: ein Prüfstandaufbau zur Bestimmung des Durchflussverhaltens des Gasventils,
- Fig. 2: ein ermitteltes Durchflusskennfeld,
- Fig. 3: ein erstes Ausführungsbeispiel eines Gasventils in geschnittener, schematisierter Seitenansicht,
- Fig. 4: ein zweites Ausführungsbeispiel eines Gasventils,
- Fig. 5: ein drittes Ausführungsbeispiel eines Gasventils,
- Fig. 6: ein viertes Ausführungsbeispiel eines Gasventils und
- Fig. 7: ein fünftes Ausführungsbeispiel eines Gasventils.

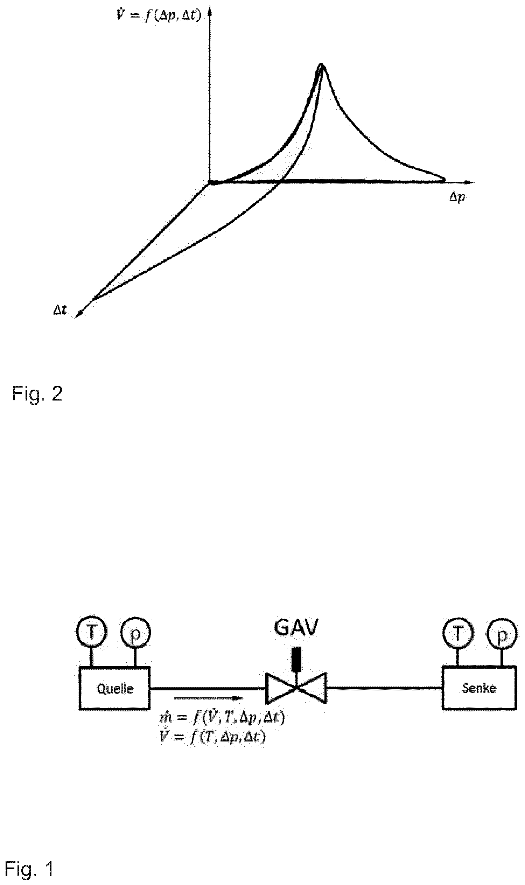

In Fig. 1 ist ein Prüfstand dargestellt, mit dem das Durchflussverhalten des einzusetzenden Gasventils 1 bestimmt werden kann. Der Prüfstand besteht aus einer Messstrecke, in die das Gasventil 1 zunächst im geschlossenen Zustand montiert und anschließend mit einem definierten Quell- und Senkendruck beaufschlagt wird. Hierbei ist darauf zu achten, dass Quell- und Senkendruck (also das Druckverhältnis über dem Ventil) stets Werten entsprechen, die auch im realen motorischen Betrieb auftreten können. Der Senkendruck, welcher dem Ladeluftdruck entspricht, liegt hierbei in der Regel in einem Bereich zwischen 1 bar_{abs} und 6 bar_{abs}, während der Quelldruck dem (reduzierten) Tankdruck des Gastanks, abzüglich der Systemdruckverluste entspricht. In der Regel beträgt der Tankdruck max. 10 bar_{abs}, auch dieser kann allerdings variieren. Für verschiedene Druckverhältnisse, Gastemperaturen und Öffnungsdauern wird nun das Ventil geöffnet und der Durchfluss messtechnisch bestimmt. Die Variation der Öffnungsintervalle des Ventils ist wichtig, zumal insbesondere bei kurzen Öffnungsdauern (z. B. im Teillastbetrieb) der Anteil des Schließ- und Öffnungsvorgangs an der Gesamtdurchströmungsdauer erheblich größer ist, als bei großen Öffnungsdauern, welche dadurch gekennzeichnet sind, dass das Ventil über einen relativ langen Zeitraum vollständig geöffnet ist und sich die Durchstömungsverhältnisse folglich entsprechend lange nicht ändern. Somit ist der Volumendurchfluss in diesen (Teillast-)Betriebspunkten sehr dynamisch und damit auch ventilspezifisch, was eine Berechnung signifikant erschwert. Weiterhin ist es je nach Ventilbauart und Druckverhältnis theoretisch möglich, dass im engsten Querschnitt die lokale Schallgeschwindigkeit des strömenden Mediums und damit ein Grenzwert für die volumetrische Durchströmung des Ventils erreicht werden. Dieses Phänomen kann Einfluss auf den Aufbau des Kennfeldes haben.

Nach der Bestimmung einer ausreichenden Anzahl an Stützstellen, kann das Ventildurchflusskennfeld (Fig. 2) erstellt werden. Jetzt ist das Gasvolumen, welches das Ventil passiert, in Abhängigkeit von der Öffnungsdauer und dem Druckverhältnis in jedem theoretisch möglichen Arbeitspunkt der Maschine bekannt. Unter Berücksichtigung von Temperatur und Dichte sowie Heizwert des Brenngases, kann nun der zugeführte Energiestrom bzw. die zugeführte Energiemenge pro Arbeitsspiel bestimmt werden. Durch das Hinterlegen besagten Kennfeldes in der Motorsteuerung, ist eine Regelstrategie denkbar, wie sie auch bei Dieselmotoren seit langer Zeit zum Einsatz kommt (Hinweis: Hier ist die zugeführte Energiemenge bekannt, weil sie aufgrund des flüssigen Aggregatzustandes des Kraftstoffes proportional zum Kraftstoffvolumen ist).

Das erfindungsgemäße Verfahren ermöglicht es, den Druckregler aus der Ursprungskonfiguration durch einen simplen Druckminderer zu ersetzen bzw. komplett auf die Komponente zu verzichten. Durch das Entfallen der Regelaufgaben gibt es keine Notwendigkeit mehr, eine zusätzliche Komponente in die Motorsteuerung einzubinden. Weiterhin besteht keine Notwendigkeit mehr, die dann noch verbleibenden Gasarmaturen in unmittelbarer Motornähe zu positionieren.

In der Umsetzung des erfindungsgemäßen Verfahrens ist das Durchflusskennfeld in der Steuerung zu hinterlegen, so dass die Gasmasse für jeden Einblasvorgang und damit die zugeführte Energiemenge entweder in guter Näherung oder sogar exakt (sofern die Gaszusammensetzung und damit der Heizwert bekannt sind) bemessen werden kann. Das Verfahren setzt voraus, dass der Volumenstrom durch das Ventil in Abhängigkeit von der Druckdifferenz über dem Ventil zu jedem Zeitpunkt bekannt ist. Mit Hilfe einer Temperatur- und Druckmessung kann die Dichte des Gases bestimmt werden. Das Produkt aus Dichte und Volumenstrom liefert den Gasmassenstrom, der, multipliziert mit dem Heizwert, den dem Motor zugeführten Energiestrom ergibt.

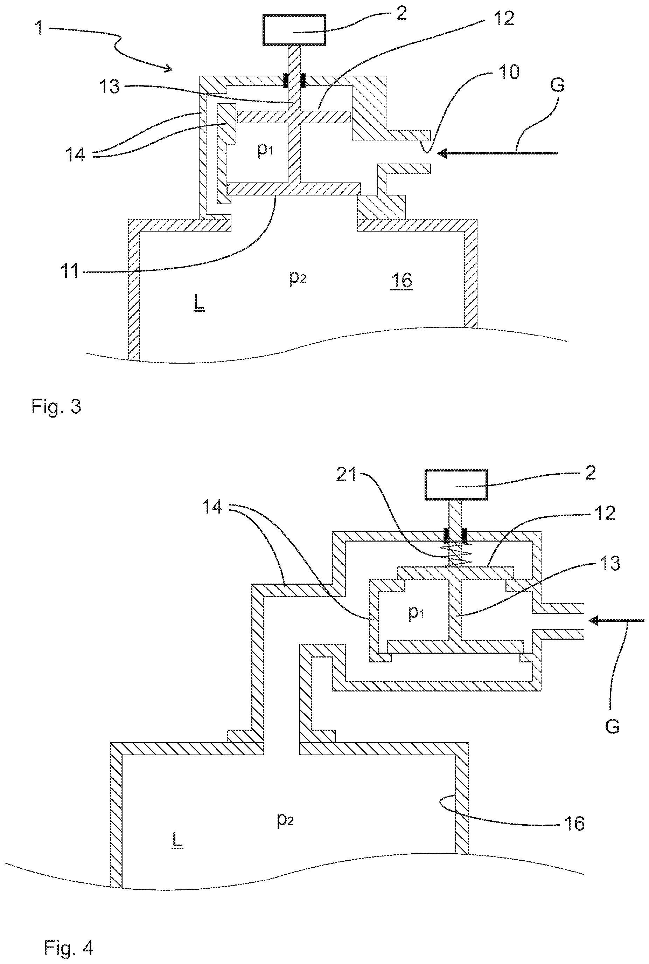

In Fig. 3 ist in einem schematischen Querschnitt dargestellt ein Gasventil 1 mit einer Gaszufuhr 10 für Verbrennungsgas G sowie einem Mischraum 16, der unmittelbar stromaufwärtig zu einem Zylinder eines nicht näher dargestellten Gasmotors oder Zweistoffmotors gehört. In der Gaszufuhr 10 steht das Verbrennungsgas G mit einem Gasdruck p₁ an. Im Mischraum 16 herrscht ein Ladedruck p₂, der von dem jeweiligen momentan abgeforderten Betriebspunkt des Gasmotors oder Zweistoffmotors abhängt. In dem Mischraum 16 befindet sich Verbrennungsluft L, die zusammen mit dem bedarfsweise über das Gasventil 1 zugeführten Verbrennungsgas G beim Betrieb des Gasmotors oder Zweistoffmotors über die Motoreinlassventile (nicht dargestellt) in den Brennraum des bzw. der Zylinder des Motors eingesogen werden.

Das Gasventil 1 weist ein im Wesentlichen zylindrisches Gehäuse 14 auf, in dem ein Tellerventil 11 in Zylinderachse über einen Aktuator 2 verschiebbar von einer Schließstellung, wie in Fig. 3 dargestellt, in eine Offenstellung (in Fig. 3 nach oben verschoben) verstellt werden kann. Dabei ist das Tellerventil 11 über einen in der Zylinderachse liegenden Schaft 13 mit dem Aktuator 2 verbunden. Ferner ist auf dem Schaft 13 ein Gegenkolben 12 angeordnet, der ebenfalls dichtend in dem Gehäuse 14 gelagert ist und bei seiner Verschiebung von der Schließstellung in die Offenstellung in dem Gehäuse 14 dichtend geführt ist. Das Gehäuse 14 des Gasventils 1 ist jedoch so ausgebildet, dass der auf dem Tellerventil 11 von oben lastende Gasdruck p₁ ebenfalls auf den Gegenkolben 12 auf seiner Unterseite wirkt. Da der Gegenkolben 12 im Ausführungsbeispiel gemäß Fig. 3 nur geringfügig kleiner ist als das Tellerventil 11, werden die Druckkräfte, die durch den Gasdruck p₁ auf das Gasventil 1 wirken im Wesentlichen ausgeglichen. Auf den gegenüberliegenden Seiten des Tellerventils 11 beziehungsweise des Gegenkolbens 12 lasten wiederum einander entgegenstehend die Druckkräfte des Ladedrucks p₂ auf, sodass sich diese auch im Wesentlichen kompensieren. Damit liegt ein druckentlastetes Ventil 1 vor.

Zum Öffnen braucht der Aktuator 2 somit nur eine relativ geringe Kraft auf den Schaft 13 in Zeichenebene gemäß Fig. 3 nach oben bewirken, um das Ventil zu öffnen. Durch den geringfügig kleineren Gegenkolben 12 im Gegensatz zum Tellerventil 11 ist jedoch stets eine Kraft in Richtung der Schließstellung beim Öffnen des Ventils 1 zu überwinden, da der Gasdruck p₁ stets größer als der Ladedruck p₂ ist. Insoweit ist das druckentlastete Ventil 1 in seiner Schließstellung durch p₁ > p₂ leicht belastet.

Im zweiten Ausführungsbeispiel gemäß Fig. 4, bei der gleichwirkende Bauteile mit gleichen Bezugszeichen bezeichnet sind, ist das Gasventil 1 ebenfalls als Tellerventil 11 mit Gegenkolben 12, geführt in einem Gehäuse 14 ausgestaltet. In diesem Ausführungsbeispiel ist zwar wiederum der Durchmesser des Tellerventils 11 geringfügig größer als der Gegenkolben 12, gleichwohl weist dieses Ventil 1 neben dem Aktuator 2 eine Feder 21 auf, die auf dem Schaft 13 sitzt und als Druckfeder den Schaft 13 mit Gegenkolben 12 und Tellerventil 11 mit in Zeichenebene in Fig. 4 nach unten wirkender Kraft vorbelastet. Mit dieser Konstruktion wird sichergestellt, dass auch bei annähernd gleichem Gasdruck p₁ = Luftladedruck p₂ das Gasventil 1 in seiner Schließstellung bestehen bleibt. Bei Betätigung des Ventils über Aktuator 2 bewirkt der Aktuator ein Öffnen des Gasventils 1 durch Anheben des Schaftes 13 gegen die auf dem Tellerventil 11 und dem Gegenkolben 12 wirkenden Druckkräfte (annähernd ausgeglichene Druckentlastung) und die Kraft der Feder 21.

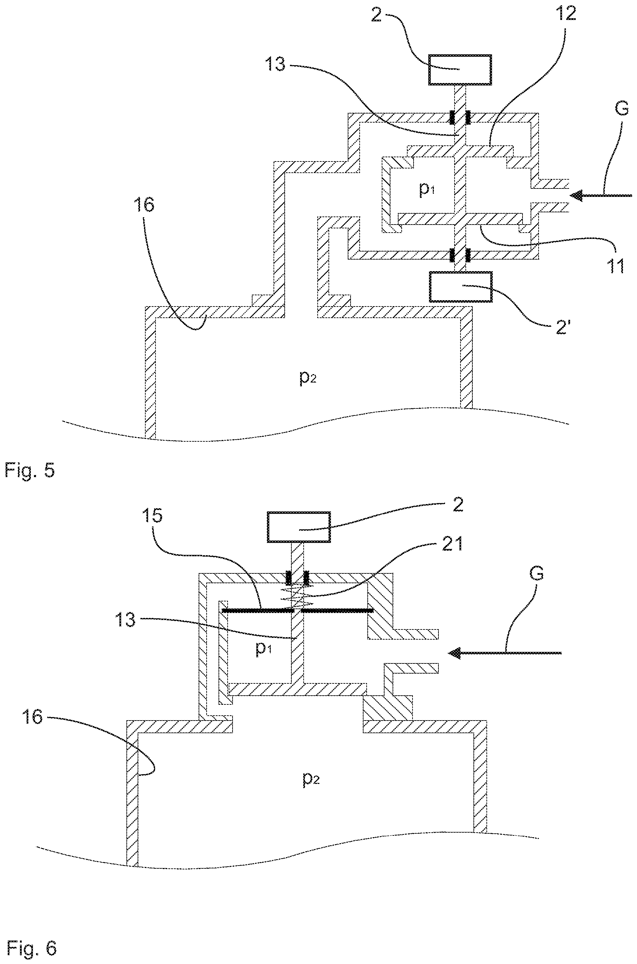

In Fig. 5 ist ein drittes Ausführungsbeispiel der Erfindung mit einem Gasventil 1 dargestellt, das einen beidseitig durch das Gehäuse 14 des Gasventils 1 hindurchtretenden Schaft 13 aufweist. Dabei sind beidseitig des Gehäuses 14 auf den nach außen vorstehenden Enden des Schaftes 13 jeweils ein Aktuator 2, 2' vorgesehen, die gemeinsam den Schaft 13 von der Schließstellung in die Offenstellung und wieder zurück schalten können. Im Übrigen ist das Gasventil 1 ebenso wie in den Ausführungsbeispielen 1 und 2 gemäß den Fig. 3 und 4 mit einem Tellerventil 11 und dem Gegenkolben 12 ausgestattet.

In Fig. 6 ist ein viertes Ausführungsbeispiel eines Gasventils 1 an einem Gasmotor oder Zweistoffmotor dargestellt, bei dem in dem Gehäuse 14 des Gasventils 1 eine Druckmembran 15 so angeordnet ist, dass die Druckmembran 15 dem Tellerventil 11 gegenübersteht und an ihrem äußeren kreisrunden Rand im Gehäuse 14 verankert ist, wohingegen die Druckmembran 15 im Zentrum mit dem Schaft 13 in Verbindung steht. Bei entsprechender Druckdifferenz zwischen p₁ und p₂ mit p₁ > p₂ wirken somit einerseits Kräfte auf dem Tellerventil 11 von oben nach unten und über die Druckmembran 15 von unten nach oben in Zeichenebene der Fig. 4, die sich aufgrund der Flächenübereinstimmungen genau kompensieren. Entsprechend wird auf den gegenüberliegenden Seiten der Druckmembran 15 beziehungsweise des Tellerventils 11 der Ladedruck p₂ in einander gegenüberliegend wirkenden Richtungen wirksam, der sich ebenfalls kompensiert. Somit liegt ein druckentlastetes Ventil 1 vor, bei dem über den Aktuator 2 mit relativ geringen Stellkräften die Offenstellung beziehungsweise die Schließstellung eingestellt werden kann. Um eine Vorbelastung in Richtung der Schließstellung zu erreichen ist ferner eine Druckfeder 21 auf dem Schaft 13 zwischen dem Gehäuse und der Druckmembran 15 angeordnet. Die insgesamt über den Schaft 13 und Tellerventil 11 auf den Ventilsitz 17 wirkende Kraft wird somit im Wesentlichen von der Druckfeder 21 bewirkt. Entsprechend kann die Stellkraft des Aktuators 2 mit der Gegenkraft der Druckfeder 21 aufeinander abgestimmt werden.

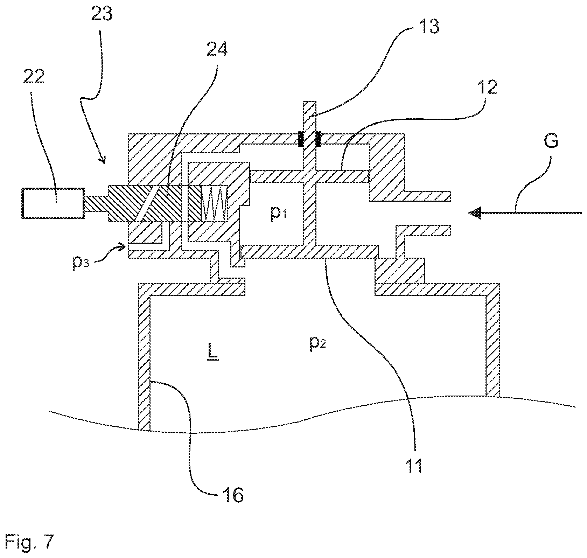

In Fig. 7 ist ein fünftes Ausführungsbeispiel eines Gasventils 1 an einem Gasmotor oder Zweistoffmotor dargestellt, bei dem in dem Gehäuse 14 des Gasventils 1 wiederum ein Tellerventil 11 und ein Gegenkolben 12 auf einem gemeinsamen Schaft 13 angeordnet ist, der eine Druckentlastung an dem Ventil 1 zwischen dem unter dem Druck p₁ stehenden Verbrennungsgas G und der unter dem geringeren Druck p₂ stehenden Verbrennungsluft L liefert. Im Gegensatz zu den Ausführungsbeispielen eins, zwei und drei wird jedoch der Schaft 13 des Gasventils 1 nicht unmittelbar von einem Aktuator betätigt. Vielmehr ist im fünften Ausführungsbeispiel ein Hilfsaktuator 22 vorgesehen, der ein Hilfsventil 23 betätigt. Das Hilfsventil 23 weist einen Ventilblock 24 auf, der in seiner Grundstellung, so wie in Fig. 7 dargestellt, eine Fluidverbindung vom Mischraum 16 mit der dort befindlichen Verbrennungsluft L zur Oberseite des Gegenkolbens 12 schafft und somit die Druckentlastung am Gasventil 1 ermöglicht. Durch die geringfügig größere Fläche des Tellerventils im Vergleich zum Gegenkolben liegt das Gasventil 1 mit einer kleinen Kraft im Sitz seiner Schließstellung.

Wird nun der Hilfsaktuator 22 angesteuert und das Hilfsventil 23 mit seinem Ventilblock 24 nach rechts (in der Zeichenebene der Fig. 7) verschoben, so wird der Raum oberhalb des Gegenkolbens 12 über die dann neu geschaffene Fluidverbindung zu einem Senkendruck p₃, beispielsweise dem Umgebungsdruck, entlastet. Damit entfällt die annähernde Druckentlastung am Gasventil 1, so dass sich das Gasventil 1 aus der Schließstellung öffnet.

Wird nunmehr das Hilfsventil 23 über Hilfsaktuator 22 wieder in seine Grundstellung verstellt, baut sich auf der Oberseite des Gegenkolbens 12 wiederum der momentan im Mischraum 16 wirkende Druck (p₂) auf, so dass aufgrund der etwas größeren wirksamen Fläche des Tellerventils 11 im Vergleich zum Gegenkolben 12 das Ventil 1 wieder schließt. Gegebenenfalls kann das Schließen des Gasventils 1 über eine Druck- Zug- oder Drehfeder in Richtung Schließstellung unterstützt werden, wie es jedoch in Fig. 7 nicht explizit dargestellt ist.

In allen fünf Ausführungsbeispielen ist in der Gaszufuhr 10 stromaufwärtig der Abbildungen keine Gasregelstrecke vorgesehen. Der Gasdruck p₁ des Verbrennungsgases G braucht durch die wirksame Druckentlastung des Gasventils 1 nicht gegen den sich stets ändernden Ladedruck p₂ angepasst werden. Insoweit ist eine Gasdruckregelung zur Versorgung von Gasmotoren beziehungsweise Zweistoffmotoren, so wie dies bisher durchgeführt wurde, insbesondere mit dem druckentlasteten Gasventil 1 nicht erforderlich. In der Gaszufuhr 10 kann selbstverständlich eine Gasfilterung und gegebenenfalls eine Sicherheitsabsperrung vorgesehen werden. Insoweit kann - je nach erforderlichen Sicherheitsbestimmungen und zu verarbeitender Gasqualität - zwar eine Vorbehandlung des Gases und eine mögliche Sicherheitsabsperrung vorzusehen sein, jedoch ist eine Gasdruckregelung in Abhängigkeit von im Gasmotor beziehungsweise Zweistoffmotor herrschenden Ladedruck und Betriebszustand nicht erforderlich. Dies vereinfacht den Betrieb des Gasmotors beziehungsweise Zweistoffmotors erheblich, verringert den Wartungsaufwand und verbessert die Zuverlässigkeit des Gasmotors beziehungsweise Zweistoffmotors im Gasbetrieb, sodass etwaig vorgeschriebene Redundanzen bei beispielsweise Schiffsantrieben aus Sicherheitsgründen nicht mehr erforderlich sein dürften.

### Bezugszeichenliste

- 1: Gasventil, druckentlastetes Ventil
- 10: Gaszufuhr
- 11: Tellerventil
- 12: Gegenkolben
- 13: Schaft
- 14: Gehäuse
- 15: Druckmembran
- 16: Mischraum
- 17: Ventilsitz

- 2, 2': Aktuator
- 21: Feder
- 22: Hilfsaktuator
- 23: Hilfsventil
- 24: Ventilblock

- G: Verbrennungsgas
- L: Verbrennungsluft
- p₁: Gasdruck
- p₂: Luftladedruck
- p₃: Senkendruck, Umgebungsdruck

## Patentansprüche

1. Gaszufuhrverfahren für einen Gasmotor oder Zweistoffmotor, in dem Verbrennungsgas (G) mit Verbrennungsluft (L) verbrannt wird, wobei stromaufwärtig des Gasmotors oder Zweistoffmotors ein Gasventil (1) zum Zuführen von Verbrennungsgas (G) in die Verbrennungsluft (L) angeordnet ist, wobei der Gasmotor oder Zweistoffmotor mit einem veränderlichen Ladeluftdruck beaufschlagt wird, wobei das Verbrennungsgas (G) unabhängig vom Betriebszustand des Gasmotors oder Zweistoffmotors ungeregelt dem Gasventil (1) zugeführt wird und dabei die Gaszumessung allein durch die präzise Steuerung des Gasventils erfolgt, nämlich während des Betriebes des Gasmotors oder Zweistoffmotors der Druck vor und hinter dem Gasventil (1) sowie die Temperatur des zugeführten Verbrennungsgases gemessen, der Motorbetriebspunkt erfasst und daraus die Öffnungsdauer und/oder die freigegebene Öffnungsquerschnittsfläche des Gasventils (1) gesteuert werden, wobei das Gasventil (1) unmittelbar vor dem Einlassbereich des Gasmotors bzw. Zweistoffmotors angeordnet ist.

2. Verfahren nach Anspruch 1, **dadurch gekennzeichnet, dass** ein vorab erfasstes Durchflusskennfeld des Gasventils (1) hinterlegt wird und die Öffnungsdauer und/oder die freigegebene Öffnungsquerschnittsfläche des Gasventils (1) gemäß der aktuellen Messwerte, des aktuellen Motorbetriebspunktes und des Durchflusskennfeldes gesteuert werden.

3. Verfahren nach Anspruch 1 oder 2, **dadurch gekennzeichnet, dass** der Druck des dem Gasventil (1) zugeführten Verbrennungsgases (G) gemindert oder begrenzt wird.

4. Verfahren nach Anspruch 1, 2 oder 3, **dadurch gekennzeichnet, dass** das Gasventil (1) druckentlastet betrieben wird.

5. Gasversorgungsvorrichtung für einen Gasmotor oder Zweistoffmotor, in dem Verbrennungsgas (G) mit Verbrennungsluft (L) verbrannt wird, mit einer druckbehafteten Gasquelle und einer Gaszufuhr (10) zum Gasmotor oder Zweistoffmotor, wobei stromaufwärtig zum Gasmotor oder Zweistoffmotor in der Gaszufuhr (10) ein Gasventil (1) zum Zuführen von Verbrennungsgas (G) in die Verbrennungsluft (L) angeordnet ist, wobei das Gasventil der Gasversorgungsvorrichtung nach dem Verfahren nach einem der vorangehenden Ansprüche gesteuert wird, wobei der Gasmotor oder Zweistoffmotor mit einem veränderlichen Ladeluftdruck beaufschlagt ist, wobei das Gasventil (1) unabhängig von der dort anliegenden Druckdifferenz betätigbar ausgebildet ist und unmittelbar vor dem Einlassbereich des Gasmotors bzw. Zweistoffmotors angeordnet ist, so dass eine Regelung des Gasdruckes in Abhängigkeit vom Betriebszustand des Gasmotors oder Zweistoffmotors stromaufwärtig zum Gasventil (1) nicht vorgesehen ist.

6. Gasversorgungsvorrichtung nach Anspruch 5, **dadurch gekennzeichnet, dass** in der Gaszufuhr (10) ein Druckbegrenzer oder ein Druckminderer stromaufwärtig zum Gasventil (1) vorgesehen ist.

7. Gasversorgungsvorrichtung nach Anspruch 5 oder 6, **dadurch gekennzeichnet, dass** das Gasventil (1) als druckentlastetes Ventil ausgebildet ist.

8. Gasversorgungsvorrichtung nach Anspruch 7, **dadurch gekennzeichnet, dass** das Gasventil (1) ein Tellerventil (11) und einen Gegenkolben (12) hat, wobei der Gegenkolben (12) etwa gleichen wirksamen Querschnitt wie das Tellerventil (11) aufweist.

9. Gasversorgungsvorrichtung nach Anspruch 8, **dadurch gekennzeichnet, dass** das Tellerventil (11) und der Gegenkolben (12) auf einem Schaft (13) sitzen, wobei das Tellerventil (11) und der Gegenkolben (12) des Gasventils (1) mit dem Schaft (13) in einem Gehäuse (14) geführt sind.

10. Gasversorgungsvorrichtung nach Anspruch 7, **dadurch gekennzeichnet, dass** das Gasventil (1) ein Tellerventil (11) und eine Druckmembran (15) hat, wobei die Druckmembran (15) etwa gleichen wirksamen Querschnitt wie das Tellerventil (11) aufweist.

11. Gasversorgungsvorrichtung nach Anspruch 10, **dadurch gekennzeichnet, dass** das Tellerventil (11) und die Druckmembran (15) auf einem Schaft (13) sitzen, wobei das Tellerventil (11) mit dem Schaft (13) in einem Gehäuse (14) geführt und die Druckmembran (15) in dem Gehäuse (14) befestigt sind.

12. Gasversorgungsvorrichtung nach einem der Ansprüche 7 bis 11, **dadurch gekennzeichnet, dass** zum Gasventil (1) ein Hilfsventil (23) mit Hilfsventilaktuator (22) vorgesehen ist, das in Grundstellung eine Fluidverbindung zu einer Seite des Gegenkolbens (12) oder Druckmembran (15) bildet und in aktivierter Stellung eine Verbindung zu einem Senkendruck (p₃) liefert.

13. Gasversorgungsvorrichtung nach Anspruch 9 oder 11, **dadurch gekennzeichnet, dass** ein auf den Schaft (13) wirkender Aktuator (2) zum Stellen des Gasventils (1) vorgesehen ist.

## Claims

1. A gas feed method for a gas engine or dual-fuel engine in which combustion gas (G) is combusted with combustion air (L), wherein a gas valve (1) for feeding combustion gas (G) into the combustion air (L) is arranged upstream of the gas engine or dual-fuel engine, wherein the gas engine or dual-fuel engine is acted upon by a variable charge air pressure, wherein the combustion gas (G) is fed in a non-regulated manner to the gas valve (1) independently of the operating state of the gas engine or dual-fuel engine and in the process the gas metering takes place solely by precise control of the gas valve, namely during the operation of the gas motor or dual-fuel motor, the pressure upstream and downstream of the gas valve (1) and the temperature of the fed combustion gas are measured, the engine operating point is determined and from that the opening duration and/or the freed opening cross-sectional area of the gas valve (1) is/are controlled, wherein the gas valve (1) is arranged directly upstream of the intake region of the gas engine or dual-fuel engine.

2. A method according to claim 1, **characterised in that** a flow characteristic diagram, determined in advance, of the gas valve (1) is stored and the opening duration and/or the freed opening cross-sectional area of the gas valve (1) is/are controlled according to the current measured values, the current engine operating point and the flow characteristic diagram.

3. A method according to claim 1 or 2, **characterised in that** the pressure of the combustion gas (G) fed to the gas valve (1) is reduced or restricted.

4. A method according to claim 1, 2 or 3, **characterised in that** the gas valve (1) is operated in a pressure-relieved manner.

5. A gas supply device for a gas engine or dual-fuel engine in which combustion gas (G) is combusted with combustion air (L), having a pressurised gas source and a gas feed (10) for the gas engine or dual-fuel engine, wherein upstream of the gas engine or dual-fuel engine, a gas valve (1) for feeding combustion gas (G) into the combustion air (L) is arranged in the gas feed (10), wherein the gas valve of the gas supply device is controlled according to the method according to any one of the preceding claims, wherein the gas engine or dual-fuel engine is acted upon by a variable charge air pressure, wherein the gas valve (1) can be actuated independently of the pressure difference applied there and is arranged directly upstream of the intake region of the gas engine or dual-fuel engine, so that regulation of the gas pressure dependent on the operating state of the gas engine or dual-fuel engine is not provided upstream of the gas valve (1).

6. A gas supply device according to claim 5, **characterised in that** a pressure limiter or a pressure reducer is provided in the gas feed (10), upstream of the gas valve (1).

7. A gas supply device according to claim 5 or 6, **characterised in that** the gas valve (1) is in the form of a pressure-relieved valve.

8. A gas supply device according to claim 7, **characterised in that** the gas valve (1) has a disc valve (11) and a counter piston (12), wherein the counter piston (12) has substantially the same effective cross-section as the disc valve (11).

9. A gas supply device according to claim 8, **characterised in that** the disc valve (11) and the counter piston (12) are located on a shaft (13), wherein the disc valve (11) and the counter piston (12) of the gas valve (1) are guided with the shaft (13) in a housing (14).

10. A gas supply device according to claim 7, **characterised in that** the gas valve (1) has a disc valve (11) and a pressure diaphragm (15), wherein the pressure diaphragm (15) has substantially the same effective cross-section to the disc valve (11).

11. A gas supply device according to claim 10, **characterised in that** the disc valve (11) and the pressure diaphragm (15) are located on a shaft (13), wherein the disc valve (11) is with the shaft (13) guided in a housing (14) and the pressure diaphragm (15) is secured in the housing (14).

12. A gas supply device according to any one of claims 7 to 11, **characterised in that** an auxiliary valve (23) with an auxiliary valve actuator (22) is provided for the gas valve (1), which auxiliary valve forms in the initial position a fluid connection to one side of the counter piston (12) or pressure diaphragm (15) and in an activated position provides a connection to a lowering pressure (p₃).

13. A gas supply device according to claim 9 or 11, **characterised in that** an actuator (2) acting on the shaft (13) is provided to adjust the gas valve (1).

## Revendications

1. Procédé d'amener de gaz pour un moteur à gaz ou un moteur à deux combustibles, dans lequel le gaz de combustion (G) est brûlé avec de l'air de combustion (L), une soupape à gaz (1) pour l'amenée du gaz de combustion (G) dans l'air de combustion (L) étant disposée en amont du moteur à gaz ou du moteur à deux combustibles, le moteur à gaz ou le moteur à deux combustibles étant soumis à une pression d'air de suralimentation variable, le gaz de combustion (G) étant amené de manière non régulée à la soupape à gaz (1) indépendamment de l'état de fonctionnement du moteur à gaz ou du moteur à deux combustibles, et la régulation du gaz étant réalisée uniquement par la commande précise de la soupape à gaz, à savoir que, durant le fonctionnement du moteur à gaz ou du moteur à deux combustibles, la pression en amont et en aval de la soupape à gaz (1) et la température du gaz de combustion amené sont mesurées, le point de fonctionnement du moteur est déterminé et, sur cette base, la durée d'ouverture et/ou la surface de la section transversale d'ouverture libérée de la soupape à gaz (1) sont commandées, la soupape à gaz (1) étant disposée directement en amont de la zone d'admission du moteur à gaz ou du moteur à deux combustibles.

2. Procédé selon la revendication 1, **caractérisé en ce qu'**un diagramme caractéristique d'écoulement de la soupape à gaz (1) déterminé préalablement est mémorisé, et la durée d'ouverture et/ou la surface de la section transversale d'ouverture libérée de la soupape à gaz (1) sont commandées en fonction des valeurs mesurées actuelles, du point de fonctionnement actuel du moteur et du diagramme caractéristique d'écoulement.

3. Procédé selon la revendication 1 ou 2, **caractérisé en ce que** la pression du gaz de combustion (G) amené à la soupape à gaz (1) est réduite ou limitée.

4. Procédé selon la revendication 1, 2 ou 3, **caractérisé en ce que** la soupape à gaz (1) est actionnée équilibrée.

5. Dispositif d'alimentation en gaz pour un moteur à gaz ou un moteur à deux combustibles, dans lequel le gaz de combustion (G) est brûlé avec de l'air de combustion (L), comportant une source de gaz sous pression et une amenée de gaz (10) vers le moteur à gaz ou le moteur à deux combustibles, une soupape à gaz (1) pour l'amenée de gaz de combustion (G) dans l'air de combustion (L) étant disposée dans l'amenée de gaz (10) en amont du moteur à gaz ou du moteur à deux combustibles, la soupape à gaz du dispositif d'alimentation en gaz étant commandée par le procédé selon l'une des revendications précédentes, le moteur à gaz ou le moteur à deux combustibles étant soumis à une pression d'air de suralimentation variable, la soupape à gaz (1) étant conçue de manière à pouvoir être actionnée indépendamment de la différence de pression qui y est appliquée et étant disposée directement devant la zone d'admission du moteur à gaz ou du moteur à deux combustibles, de sorte qu'il n'est pas prévu de régulation de la pression du gaz en fonction de l'état de fonctionnement du moteur à gaz ou du moteur à deux combustibles en amont de la soupape à gaz (1).

6. Dispositif d'alimentation en gaz selon la revendication 5, **caractérisé en ce qu'**un limiteur de pression ou un réducteur de pression est prévu dans l'amenée de gaz (10) en amont de la soupape à gaz (1).

7. Dispositif d'alimentation en gaz selon la revendication 5 ou 6, **caractérisé en ce que** la soupape à gaz (1) est conçue comme une soupape équilibrée.

8. Dispositif d'alimentation en gaz selon la revendication 7, **caractérisé en ce que** la soupape à gaz (1) comporte une soupape à tige (11) et un piston opposé (12), le piston opposé (12) ayant approximativement la même section transversale effective que la soupape à tige (11).

9. Dispositif d'alimentation en gaz selon la revendication 8, **caractérisé en ce que** la soupape à tige (11) et le piston opposé (12) sont montés sur une tige (13), la soupape à tige (11) et le piston opposé (12) de la soupape à gaz (1) étant guidés avec la tige (13) dans un logement (14).

10. Dispositif d'alimentation en gaz selon la revendication 7, **caractérisé en ce que** la soupape à gaz (1) comporte une soupape à tige (11) et une membrane de pression (15), la membrane de pression (15) ayant approximativement la même section transversale effective que la soupape à tige (11).

11. Dispositif d'alimentation en gaz selon la revendication 10, **caractérisé en ce que** la soupape à tige (11) et la membrane de pression (15) sont montées sur une tige (13), la soupape à tige (11) étant guidée avec la tige (13) dans un logement (14) et la membrane de pression (15) étant fixée dans le logement (14).

12. Dispositif d'alimentation en gaz selon l'une des revendications 7 à 11, **caractérisé en ce qu'**en plus de la soupape à gaz (1), il est prévu une soupape auxiliaire (23) avec un actionneur de soupape auxiliaire (22) qui, en position de base, forme une liaison fluidique avec un côté du piston opposé (12) ou de la membrane de pression (15) et, en position actionnée, assure une liaison avec une pression d'abaissement (p₃).

13. Dispositif d'alimentation en gaz selon la revendication 9 ou 11, **caractérisé en ce qu'**un actionneur (2) agissant sur la tige (13) est prévu pour régler la soupape à gaz (1).
